# EUROPÄISCHE PATENTSCHRIFT

(11) **EP 2 765 027 B1**
(45) Veröffentlichungstag und Bekanntmachung des Hinweises auf die Patenterteilung: **30.05.2018**
(21) Anmeldenummer: 14153859.5
(22) Anmeldetag: 04.02.2014
(51) Int. Cl.: B60P 1/02, B60D 1/02, B60D 1/14, B60D 1/48, B66F 9/065, B60D 1/00

(54) **Flurförderzeug, insbesondere Anhänger eines Routenzuges**
Industrial truck, in particular trailer of a route train
Chariot de manutention, notamment remorque d'un chariot tracteur

(30) Priorität: 12.02.2013 DE 202013001255 U
(43) Veröffentlichungstag der Anmeldung: 13.08.2014
(73) Patentinhaber: Taddiken, Michael, 27211 Bassum (DE)
(72) Erfinder: Taddiken, Michael, 27211 Bassum (DE)
(74) Vertreter: Siekmann, Gunnar

(56) Entgegenhaltungen:
- EP-A2- 0 983 897
- DE-A1-102010 033 677
- DE-U1-202009 001 933

## Beschreibung

Die Erfindung betrifft ein Flurförderzeug, insbesondere einen Anhänger eines Routenzuges, mit einem Fahrgestell und einem über ein Hubwerk zwangsgeführt im Fahrgestell gehaltenen Lastenträger.

Die Anhänger der als Routenzüge bekannten Flurförderzeuge dienen der bedarfsorientierten Kommissionierung fahrbarer Ladungsträger an Produktions- und Lagerstätten, in Logistikzentren, Flughäfen, Bahnhöfen oder Hafenanlagen. Die fahrbaren Ladungsträger sind beispielsweise Rollgitter-, Regal- oder Palettenwagen, die für einen Sammeltransport in die seitlich der Anhänger gelegenen Erfassungsbereiche der Lastenträger hineingefahren, und dort über die Hubwerke von den Lastenträgern über die Flurförderebene hinaus angehoben werden. Zum Verfahren dieser vornehmlich als Anhänger ausgebildeten Flurförderzeuge dient regelmäßig eine Zugmaschine. Um einzelne Ladungsträger aus ihrem Sammeltransport herauslösen zu können, werden diese über die Hubwerke von den Lastenträgern auf der Flurförderebene abgesetzt und aus den Erfassungsbereichen der Lastenträger herausgefahren.

Aus der deutschen Gebrauchsmusterschrift DE 20 2009 001 933 U1 ist ein gattungsgemäßes Flurförderzeug für einen Routenzug bekannt, bei dem der Lastenträger ein mehrere Hubzinken tragender Tragrahmen ist, der über drei Stellantriebe am Fahrwerk hubbeweglich abgestützt ist. Die Stellantriebe sind über eine gemeinsame Pneumatik- oder Hydrauliksteuerung miteinander verbunden. Der Einsatz mindestens dreier über eine Steuerung miteinander verbundener Stellantriebe ist jedoch nachteilig kostenintensiv. Zudem ist es durch die Einbaulage der Stellantriebe erforderlich, diese besonders kompakt und leistungsstark auszubilden.

Aus der deutschen Patentanmeldung DE 10 2010 033 677 A1 ist ein weiteres Flurförderzeug für einen Routenzug bekannt, bei dem das Hubwerk einen Hub- und Schwenkmechanismus aufweist, über welchen der Lastenträger im Fahrgestell zwangsgeführt aufgehängt ist. Dazu weist der Hub- und Schwenkmechanismus ein Koppelgetriebe auf, bei dem die beweglichen Teile am Fahrgestell angelenkte Hub- und Schwenkarme sind, deren Kopplung über den Lastenträger erfolgt. Das Koppelgetriebe ermöglicht zwar eine für die Stellantriebe verbesserte Einbaulage, jedoch sind die Stellantriebe auch hier für nachteilig große Hubleistungen auszulegen.

Der Erfindung liegt deshalb die Aufgabe zugrunde, ein Flurförderzeug der eingangs genannten Gattung aufzuzeigen, mit welchem bei einer verbesserten Einbaulage der Stellantriebe auch deren erforderliche Antriebsleistung herabgesetzt werden kann.

Diese Aufgabe ist erfindungsgemäß durch die Merkmale des Anspruch 1 gelöst. Vorteilhafte Weiterbildungen der Erfindung sind in den Unteransprüchen angegeben.

Das erfindungsgemäße Flurförderzeug zeichnet sich dadurch aus, dass das Fahrgestell und der Lastenträger über ein Drehschubgelenk miteinander verbundene Tragwerksteile sind, dass das Hubwerk wenigstens ein dem Drehschubgelenk zugeordnetes Kurvengetriebe aufweist, dass das Kurvengetriebe wenigstens ein an einem der Tragwerksteile geführtes Steuerglied mit wenigstens einer an dem jeweils anderen Tragwerksteil anstehenden Steuerfläche aufweist, und dass das Kurvengetriebe wenigstens einen Lenker aufweist, an welchem das an der Steuerfläche des Steuergliedes anstehende Tragwerksteil gehalten ist.

Die zwischen Lastenträger und Fahrgestell hergestellte Zwangsführung weist somit ein an der Steuerfläche des Steuergliedes ausgebildetes erstes Loslager, ein mit dem Drehschubgelenk ausgebildetes zweites Loslager sowie ein mit dem Lenker ausgebildetes Festlager auf. Bei einem derart ausgebildeten Hubwerk ermöglichen die Bauteile des Kurvengetriebes die Ausbildung wenigstens einer Übersetzungsstufe, mit welcher die von den Stellantrieben benötigten Stellkräfte zu Lasten längerer Stellwege verkleinert werden können. Um die Bauhöhe des erfindungsgemäßen Flurförderers zu reduzieren, können die verlängerten Stellwege der Stellantriebe mit Vorteil quer zum Hubweg des Lastenträgers verlaufen, da die Übersetzungsstufe in der Ausrichtung ihrer An- und Abtriebsglieder zueinander keinen Einschränkungen unterworfen ist. Durch die Ausbildung der Übersetzungsstufe und durch die freie Wahl der Ausrichtung ihrer An- und Abtriebsglieder zueinander können den Stellantrieben des erfindungsgemäßen Flurförderzeuges Einbaulagen zugewiesen werden, die den Einsatz leistungsschwächerer sowie einfacher und flacher bauender Stellantriebe ermöglicht.

Nach einer ersten Weiterbildung der Erfindung ist der das Tragwerksteil haltende Lenker am Steuerglied seines Kurvengetriebes angelenkt. Diese Anlenkung ist bevorzugt derart positioniert, dass der Lastenträger auf einer Bewegungsbahn verfahrbar ist, deren Bahnbewegung aus einer Hubbewegung und einer Schwenkbewegung zusammengesetzt ist. Dabei dient die Hubbewegung dem Anheben und Absenken des Lastenträgers. Die Schwenkbewegung dient hingegen dem Ankippen des an einem Lastenträger ausgebildeten Erfassungsbereiches, um einen verfahrbaren Ladungsträger auf dem Lastenträger gegen unbeabsichtigtes Heruntergleiten zu sichern. Es liegt jedoch im Rahmen der Erfindung, wenn der Lenker an dem das Steuerglied führenden Tragwerksteil angelenkt ist.

Nach einer nächsten Weiterbildung der Erfindung weist das Hubwerk wenigstens einen am Steuerglied des Kurvengetriebes angreifenden Stellantrieb auf. Damit dient das Steuerglied der unmittelbaren Ansteuerung durch den Stellantrieb. In Abhängigkeit der konstruktiven Ausbildung der das Kurvengetriebe ausbildenden Getriebeteile ist es jedoch ebenso möglich, mit dem Stellantrieb am Lenker des Kurvengetriebes anzugreifen.

Zur Ausbildung besonders leistungsstarker Hubwerke wird vorgeschlagen, dass der Stellantrieb wenigstens einen Linearantrieb aufweist. Derartige Linearantriebe sind insbesondere Hydraulik- oder Pneumatikzylinder. Grundsätzlich ist es jedoch ebenso denkbar, den Stellantrieb mit Drehantrieben, beispielsweise Elektromotoren auszurüsten.

Nach einer bevorzugten Weiterbildung der Erfindung ist das das Steuerglied führende Tragwerksteil das Fahrgestell. Die Erfindung unterscheidet jedoch nicht zwischen dem als Fahrgestell und dem als Lastenträger ausgebildeten Tragwerksteil, so dass es alternativ auch denkbar ist, dass das an der Steuerfläche des Steuergliedes anstehende Tragwerksteil das Fahrgestell ist und das das Steuerglied führende Tragwerksteil der Lastenträger ist.

Zur Ausbildung eines baulich besonders kleinen und gleichwohl unempfindlichen Kurvengetriebes ist vorgesehen, dass die zwischen dem Steuerglied und einem der Tragwerksteile ausgebildete Führung wenigstens ein Drehlager aufweist. Die Erfindung ist jedoch nicht darauf beschränkt, diese Führung mittels Drehlagern auszubilden. So sind beispielsweise auch Linearlager oder Kulissenführungen zur Ausbildung der das Steuerglied an einem der Tragwerksteile haltenden Führung geeignet.

Nach einer besonders bevorzugten Weiterbildung der Erfindung weist das Steuerglied wenigstens ein an einem der Tragwerksteile geführtes Exzenterstück sowie einen drehbeweglich am Exzenterstück gelagerten Wälzkörper auf, mit dessen Wälzfläche die Steuerfläche des Steuergliedes ausgebildet ist. Zur radialen Einleitung einer Stellkraft in das Exzenterstück hinein ist der Angriffspunkt des Stellantriebes beabstandet zum Drehlager des Exzenterstückes gelegen. Über den Wälzkörper kann die Stellkraft dann besonders verschleißarm in das an seiner Wälzfläche anstehende Tragwerksteil eingeleitet werden. Für das erfindungsgemäße Flurförderzeug geeignete Wälzkörper sind insbesondere Radkörper mit eindimensional gekrümmten Laufflächen. Alternativ liegt es im Rahmen dieser Erfindung, den Wälzkörper als Gleitkufe mit wenigstens einer an einem der Tragwerksteile anstehenden Gleitfläche auszubilden.

Das die Tragwerksteile miteinander verbindende Drehschubgelenk weist wenigstens eine Führungsschiene sowie eine in der Führungsschiene hubbeweglich gehaltene Kippachse auf. Die Führungsschiene hat einen vorzugsweise gradlinigen Schienenverlauf mit wenigstens einem vertikale Richtungskomponenten aufweisenden Schienenabschnitt für die Hubbewegung. Die Kippachse weist hingegen einen längs zur Flurförderebene ausgerichteten Achsverlauf auf und ermöglicht dem Lastenträger somit seine Schwenkbewegung. Während die Führungsschiene vorzugsweise als Kulissenführung ausgebildet ist, fungiert die Kippachse als drehbeweglich in der Kulissenführung gehaltener Nutenstein.

Nach einer anderen bevorzugten Weiterbildung der Erfindung ist die Kippachse parallel zur Flurförderebene ausgerichtet, wobei die Führungsschiene einen ausschließlich rechtwinklig zur Kippachse ausgerichteten Schienenverlauf aufweist. Um die am Erfassungsbereich des Lastenträgers gemessene seitliche Ausladung unabhängig von der Schwenkstellung des Lastenträgers konstant zu halten, weist die rechtwinklig zur Kippachse ausgerichtete Führungsschiene einen zur Vertikalen geneigten Schienenverlauf auf. Die Neigung dient dabei dem Ausgleich der veränderlichen seitlichen Ausladung des Lastenträgers. In Abhängigkeit der konstruktiven Auslegung des Kurvengetriebes kann die geneigte Führungsschiene auch einen gekrümmten oder abgewinkelten Schienenverlauf aufweisen.

Ein Ausführungsbeispiel der Erfindung, aus dem sich weitere erfinderische Merkmale ergeben, ist in der Zeichnung dargestellt. Es zeigen:
- Fig. 1:: eine perspektivische Ansicht eines erfindungsgemäßen Flurförderzeuges in einem ersten Ausführungsbeispiel;
- Fig. 2:: eine Schnittansicht des Flurförderzeuges mit abgesenktem Lastenträger gemäß Linie A-A in Fig. 1:
- Fig. 3:: eine Schnittansicht gemäß Fig. 2, jedoch mit angehobenem Lastenträger;
- Fig. 4:: eine perspektivische Ansicht eines erfindungsgemäßen Flurförderzeuges in einem zweiten Ausführungsbeispiel;
- Fig. 5:: eine Schnittansicht des Flurförderzeuges mit abgesenktem Lastenträger gemäß Linie A-A in Fig. 4; und
- Fig. 6:: eine Schnittansicht gemäß Fig. 5, jedoch mit angehobenem Lastenträger.

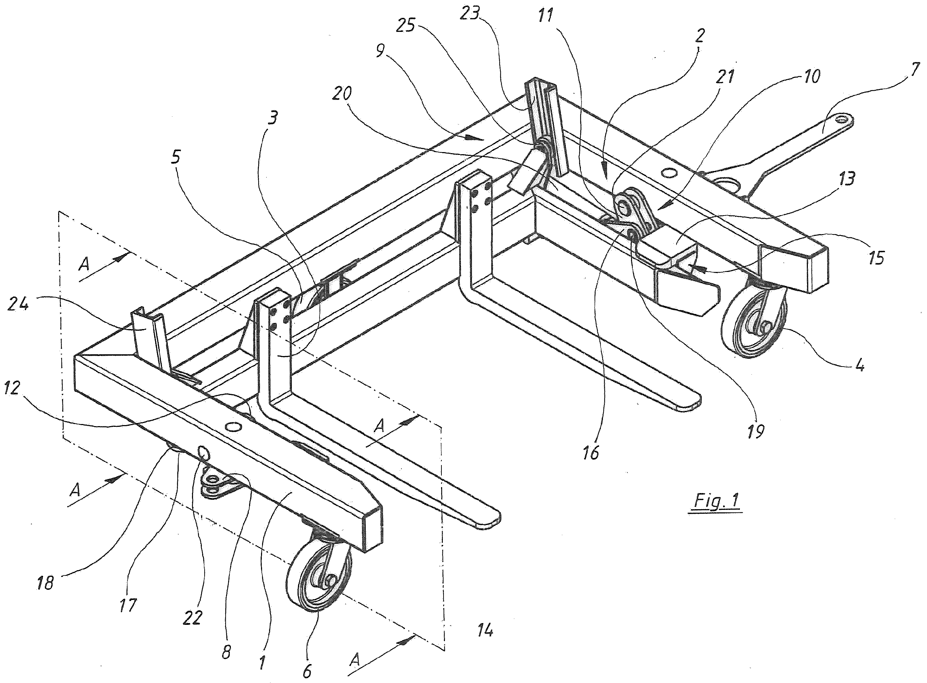

Die Fig. 1 zeigt eine perspektivische Ansicht eines erfindungsgemäßen Flurförderzeuges in einem ersten Ausführungsbeispiel. Das Flurförderzeug hat ein Fahrgestell 1 und einen über ein Hubwerk 2 zwangsgeführt im Fahrgestell 1 gehaltenen Lastenträger 3. Das Fahrgestell 1 weist drei Räder 4, 5, 6, ein Zugpendel 7 und eine Anhängerkupplung 8 auf. Das Fahrgestell 1 und der Lastenträger 3 sind über ein Drehschubgelenk 9 miteinander verbundene Tragwerksteile. Das Hubwerk 2 weist ein dem Drehschubgelenk 9 zugeordnetes Kurvengetriebe 10 mit zwei am Fahrgestell 1 geführten Steuergliedern 11, 12 auf. Jedes Steuerglied 11, 12 hat eine jeweils an einem Widerlager 13, 14 des Lastenträgers 3 anstehende Steuerfläche 15. Außerdem weist das Kurvengetriebe 10 zwei Lenker 16, 17 auf, an welchen der an den Steuerflächen 15 der Steuerglieder 11, 12 anstehende Lastenträger 3 über Drehgelenke 18 gehalten ist. Dazu sind die Lenker 16, 17 über Drehgelenke 19 an den ihnen jeweils zugeordneten Steuergliedern 11, 12 des Kurvengetriebes 10 angelenkt. Zum Anheben und Absenken des Lastenträgers 3 weist das Hubwerk 2 zwei jeweils an einem der Steuerglieder 11, 12 des Kurvengetriebes 10 angreifende Stellantriebe 20 in Form von Hydraulikzylindern auf. Drehlager 21, 22 dienen der Führung der Steuerglieder 11, 12 am Fahrgestell 1. Das Drehschubgelenk 9 weist zwei Führungsschienen 23, 24 sowie eine in den Führungsschienen 23, 24 hubbeweglich geführte Kippachse 25 auf, die parallel zur Flurförderebene verläuft. Die Führungsschienen 23, 24 weisen jeweils einen rechtwinklig zur Kippachse 25 ausgerichteten geraden Schienenverlauf auf.

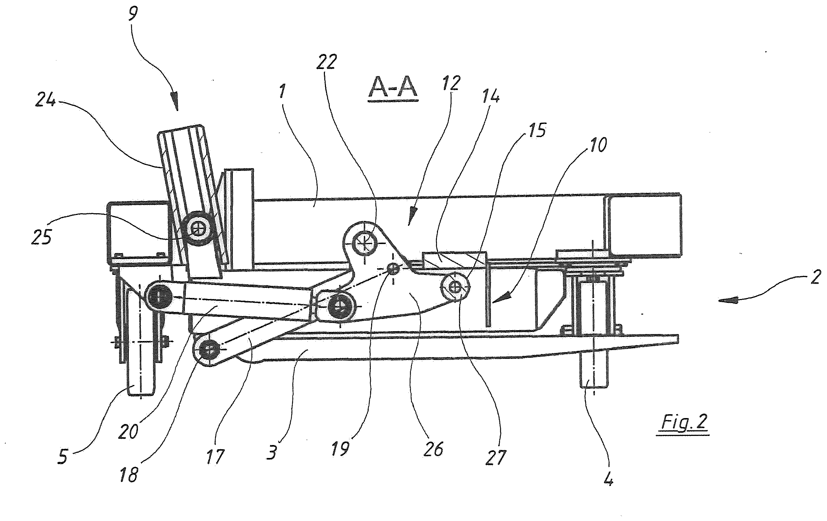

Die Fig. 2 zeigt eine Schnittansicht des Flurförderzeuges mit abgesenktem Lastenträger 3 gemäß Linie A-A in Fig. 1. In der Fig. 2 wird deutlich, dass das Steuerglied 12 ein am Fahrgestell 1 über das Drehlager 22 geführtes Exzenterstück 26 sowie einen drehbeweglich am Exzenterstück 26 gelagerten Wälzkörper 27 aufweist, mit dessen Wälzfläche die Steuerfläche 15 des Steuergliedes 12 ausgebildet ist. Gleiche Bauteile sind mit gleichen Bezugszahlen versehen.

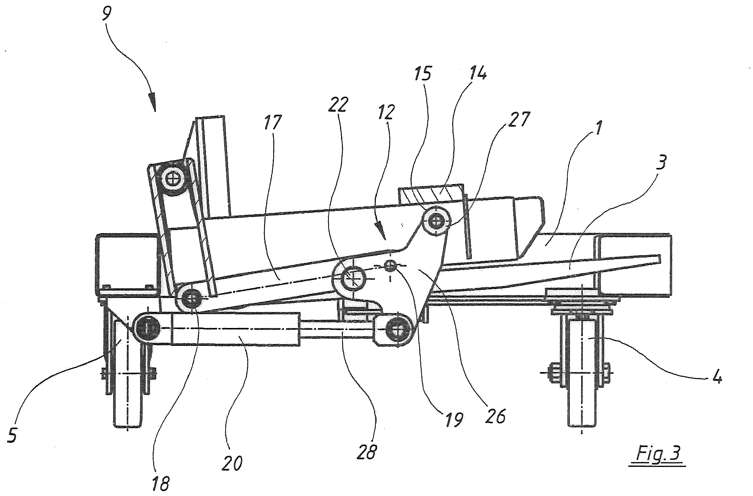

Die Fig. 3 zeigt eine Schnittansicht gemäß Fig. 2, jedoch mit in einer Arbeitsstellung angehobenen Lastenträger 3. Die Arbeitsstellung zeigt den Stellantrieb 20 mit einer ausgefahrenen Kolbenstange 28, das Steuerglied 12 in einer am Drehlager 22 gegen den Uhrzeigersinn ausgelenkten Anschlagstellung und den Lastenträger 3 in einer über das Drehschubgelenk 9 angehobenen und gleichzeitig gegen den Uhrzeigersinn gekippten Endstellung, die vom Lenker 17 und vom Wälzkörper 27 des Kurvengetriebes 10 erzwungen ist. Gleiche Bauteile sind hier ebenfalls mit gleichen Bezugszahlen versehen.

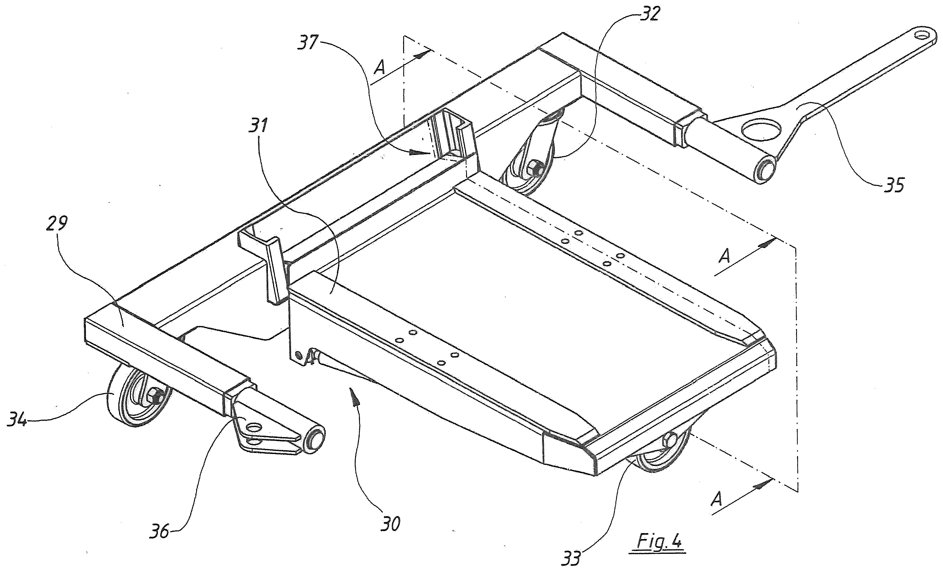

Die Fig. 4 zeigt eine perspektivische Ansicht eines erfindungsgemäßen Flurförderzeuges in einem zweiten Ausführungsbeispiel. Das Flurförderzeug hat ebenfalls ein Fahrgestell 29 und einen über ein Hubwerk 30 zwangsgeführt im Fahrgestell 29 gehaltenen Lastenträger 31. Das Fahrgestell 29 weist drei Räder 32, 33, 34, eine Deichsel 35 und eine Anhängerkupplung 36 auf. Das Fahrgestell 29 und der Lastenträger 31 sind über ein Drehschubgelenk 37 miteinander verbundene Tragwerksteile.

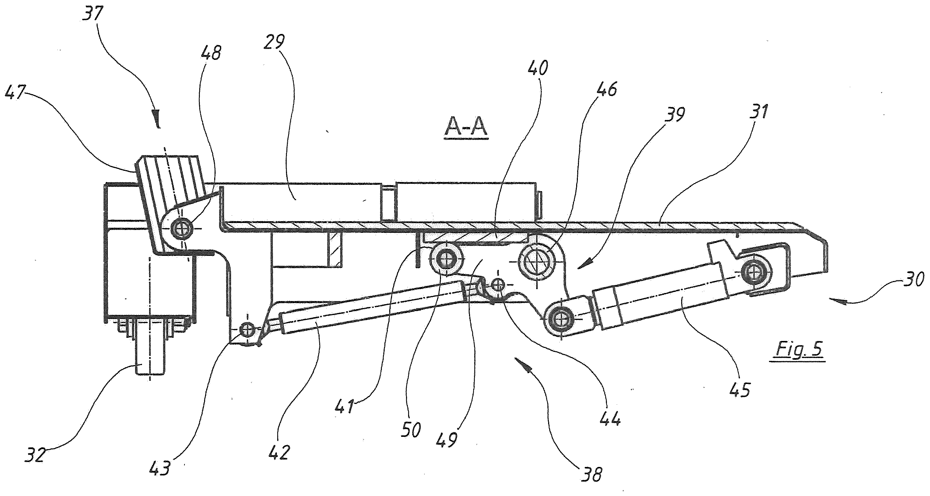

Die Fig. 5 zeigt eine Schnittansicht des Flurförderzeuges mit abgesenktem Lastenträger 31 gemäß Linie A-A in Fig. 4. Aus der Schnittansicht ist ersichtlich, dass das Hubwerk 30 ein dem Drehschubgelenk 37 zugeordnetes Kurvengetriebe 38 mit zwei am Fahrgestell 29 geführten Steuergliedern 39 aufweist. Jedes Steuerglied 39 hat eine jeweils an einem Widerlager 40 des Lastenträgers 31 anstehende Steuerfläche 41. Außerdem weist das Kurvengetriebe 38 zwei Lenker 42 auf, an welchen der Lastenträger 31 über Drehgelenke 43 gehalten ist. Dazu sind die Lenker 42 über Drehgelenke 44 an den ihnen jeweils zugeordneten Steuergliedern 39 des Kurvengetriebes 38 angelenkt. Zum Anheben und Absenken des Lastenträgers 31 weist das Hubwerk 30 zwei jeweils an einem der Steuerglieder 39 des Kurvengetriebes 38 angreifende Stellantriebe 45 in Form von Hydraulikzylindern auf. Drehlager 46 dienen der Führung der Steuerglieder 39 am Fahrgestell 29. Das Drehschubgelenk 37 weist in diesem Ausführungsbeispiel ebenfalls zwei Führungsschienen 47 sowie eine in den Führungsschienen 47 hubbeweglich geführte Kippachse 48 auf, die parallel zur Flurförderebene verläuft. Die Führungsschienen 47 weisen jeweils einen rechtwinklig zur Kippachse 48 ausgerichteten geraden Schienenverlauf auf. Das Steuerglied 39 weist ein am Drehlager 46 geführtes Exzenterstück 49 sowie einen drehbeweglich am Exzenterstück 49 gelagerten Wälzkörper 50 auf, mit dessen Wälzfläche die Steuerfläche 41 des Steuergliedes 39 ausgebildet ist. Gleiche Bauteile sind mit gleichen Bezugszahlen versehen.

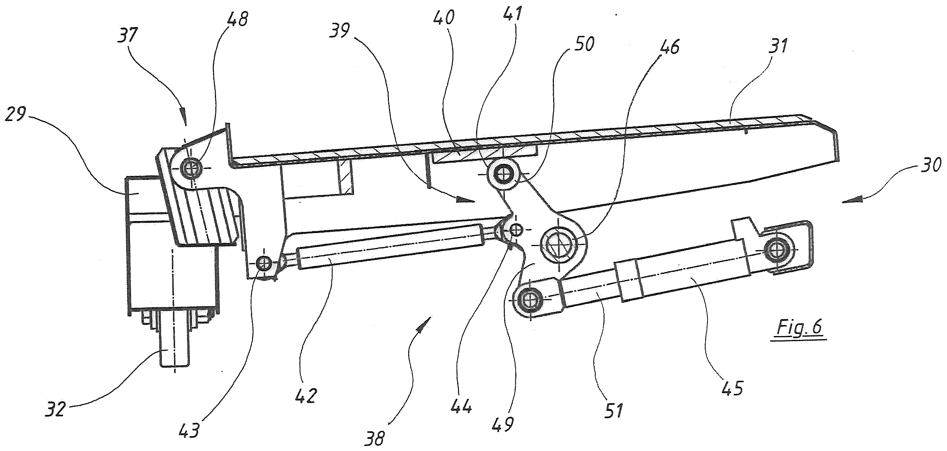

Die Fig. 6 zeigt eine Schnittansicht gemäß Fig. 5, jedoch mit in einer Arbeitsstellung angehobenen Lastenträger 31. Die Arbeitsstellung zeigt einen der beiden Stellantriebe 45 mit einer ausgefahrenen Kolbenstange 51, eines der beiden Steuerglieder 39 in einer am Drehlager 46 gegen den Uhrzeigersinn ausgelenkten Anschlagstellung und den Lastenträger 31 in einer über das Drehschubgelenk 37 angehobenen und gleichzeitig gegen den Uhrzeigersinn gekippten Endstellung, die vom Lenker 42 und vom Wälzkörper 50 des Kurvengetriebes 38 erzwungen ist. Gleiche Bauteile sind hier ebenfalls mit gleichen Bezugszahlen versehen.

## Patentansprüche

1. Flurförderzeug, insbesondere Anhänger eines Routenzuges, mit einem Fahrgestell (1, 29) und einem über ein Hubwerk (2, 30) zwangsgeführt im Fahrgestell gehaltenen Lastenträger (3, 31), wobei das Fahrgestell (1, 29) und der Lastenträger (3, 31) über ein Drehschubgelenk (9, 37) miteinander verbundene Tragwerksteile sind, wobei das Hubwerk (2, 30) wenigstens ein dem Drehschubgelenk (9, 37) zugeordnetes Kurvengetriebe (10, 38) aufweist, **dadurch gekennzeichnet,**
**dass** das Kurvengetriebe (10, 38) wenigstens ein an einem der Tragwerksteile geführtes Steuerglied (11, 12, 39) mit wenigstens einer an dem jeweils anderen Tragwerksteil anstehenden Steuerfläche (15, 41) aufweist, und
**dass** das Kurvengetriebe (10, 38) wenigstens einen Lenker (16, 17, 42) aufweist, an welchem das an der Steuerfläche (15, 41) des Steuergliedes (11, 12, 39) anstehende Tragwerksteil gehalten ist.

2. Flurförderzeug nach Anspruch 1, **dadurch gekennzeichnet, dass** der Lenker (16, 17, 42) am Steuerglied (11, 12, 39) seines Kurvengetriebes (10, 38) angelenkt ist.

3. Flurförderzeug nach Anspruch 1 oder 2, **dadurch gekennzeichnet, dass** das Hubwerk (2, 30) wenigstens einen am Steuerglied (11, 12, 39) des Kurvengetriebes (10, 38) angreifenden Stellantrieb (20, 45) aufweist.

4. Flurförderzeug nach Anspruch 3, **dadurch gekennzeichnet, dass** der Stellantrieb (20, 45) wenigstens einen Linearantrieb aufweist.

5. Flurförderzeug nach einem der Ansprüche 1 bis 4, **dadurch gekennzeichnet, dass** das das Steuerglied (11, 12, 39) führende Tragwerksteil das Fahrgestell (1, 29) ist.

6. Flurförderzeug nach einem der Ansprüche 1 bis 5, **dadurch gekennzeichnet, dass** die zwischen dem Steuerglied (11, 12, 39) und einem der Tragwerksteile ausgebildete Führung wenigstens ein Drehlager (21, 22, 46) aufweist.

7. Flurförderzeug nach einem der Ansprüche 1 bis 6, **dadurch gekennzeichnet, dass** das Steuerglied (11, 12, 39) wenigstens ein an einem der Tragwerksteile geführtes Exzenterstück (26, 49) sowie wenigstens einen drehbeweglich am Exzenterstück (26, 49) gelagerten Wälzkörper (27, 50) aufweist, mit dessen Wälzfläche die Steuerfläche (15, 41) des Steuergliedes (11, 12, 39) ausgebildet ist.

8. Flurförderzeug nach einem der Ansprüche 1 bis 7, **dadurch gekennzeichnet, dass** das Drehschubgelenk (9, 37) wenigstens eine Führungsschiene (23, 24, 47) sowie eine in der Führungsschiene (23, 24, 47) hubbeweglich gehaltene Kippachse (25, 48) aufweist.

9. Flurförderzeug nach Anspruch 8, **dadurch gekennzeichnet, dass** die Kippachse (25, 48) parallel zur Flurförderebene ausgerichtet ist, und dass die Führungsschiene (23, 24, 47) einen ausschließlich rechtwinklig zur Kippachse (25, 48) ausgerichteten Schienenverlauf aufweist.

## Claims

1. An industrial truck, in particular a trailer of a route train, having a chassis (1, 29) and a load support (3, 31) which is held in the chassis in a positively driven manner by means of a lifting mechanism (2, 30),
the chassis (1, 29) and the load support (3, 31) being support mechanism parts which are connected to each other via a revolute sliding joint (9, 37),
the lifting mechanism (2, 30) having at least one cam gear (10, 38) associated with the revolute sliding joint (9, 37),
**characterised in that**
the cam gear (10, 38) has at least one control member (11, 12, 39) which is guided on one of the support mechanism parts and has at least one control face (15, 41) which rests on the respective other support mechanism part, and
the cam gear (10, 38) has at least one link (16, 17, 42) on which the support mechanism part resting on the control face (15, 41) of the control member (11, 12, 39) is held.

2. The industrial truck according to Claim 1, **characterised in that** the link (16, 17, 42) is hinged to the control member (11, 12, 39) of the cam gear (10, 38) thereof.

3. The industrial truck according to Claim 1 or 2, **characterised in that** the lifting mechanism (2, 30) has at least one actuator (20, 45) which acts on the control member (11, 12, 39) of the cam gear (10, 38).

4. The industrial truck according to Claim 3, **characterised in that** the actuator (20, 45) has at least one linear drive.

5. The industrial truck according to any one of Claims 1 to 4, **characterised in that** the support mechanism part which guides the control member (11, 12, 39) is the chassis (1, 29).

6. The industrial truck according to any one of Claims 1 to 5, **characterised in that** the guide formed between the control member (11, 12, 39) and one of the support mechanism parts has at least one pivot bearing (21, 22, 46) .

7. The industrial truck according to any one of Claims 1 to 6, **characterised in that** the control member (11, 12, 39) has at least one eccentric (26, 49) guided on one of the support mechanism parts and at least one rolling element (27, 50) which is mounted rotatably on the eccentric (26, 49) and with the rolling face of which the control face (15, 41) of the control member (11, 12, 39) is formed.

8. The industrial truck according to any one of Claims 1 to 7, **characterised in that** the revolute sliding joint (9, 37) has at least one guide rail (23, 24, 47) and a tilt axle (25, 48) which is held in a vertically movable manner in the guide rail (23, 24, 47).

9. The industrial truck according to Claim 8, **characterised in that** the tilt axle (25, 48) is oriented parallel to the conveying plane, and the guide rail (23, 24, 47) has a rail profile which is oriented exclusively at right angles to the tilt axle (25, 48).

## Revendications

1. Chariot de manutention, notamment remorque d'un chariot tracteur, disposant d'un châssis (1, 29) et d'un porte-charge (3, 31) maintenu dans le châssis par guidage forcé par l'intermédiaire d'un mécanisme de levage (2, 30),
le châssis (1, 29) et le porte-charge (3, 31) étant des parties de la structure porteuse, reliées l'une à l'autre par l'intermédiaire d'une articulation rotative à glissière (9, 37),
le mécanisme de levage (2, 30) comportant au moins une commande à came (10, 38) associée à l'articulation rotative à glissière (9, 37), **caractérisé**
**en ce que** la commande à came (10, 38) comporte au moins un organe de commande (11, 12, 39) guidé sur l'une des parties de la structure porteuse, avec au moins une surface de commande (15, 41) présente sur l'autre partie respective de la structure porteuse, et
**en ce que** la commande à came (10, 38) comporte au moins un guidon (16, 17, 42) sur lequel est maintenue la partie de la structure porteuse présente sur la surface de commande (15, 41) de l'organe de commande (11, 12, 39).

2. Chariot de manutention selon la revendication 1, **caractérisé en ce que** le guidon (16, 17, 42) est articulé sur l'organe de commande (11, 12, 39) de sa commande à came (10, 38).

3. Chariot de manutention selon la revendication 1 ou 2, **caractérisé en ce que** le mécanisme de levage (2, 30) comporte au moins un actionneur (20, 45) s'engageant sur l'organe de commande (11, 12, 39) de la commande à came (10, 38).

4. Chariot de manutention selon la revendication 3, **caractérisé en ce que** l'actionneur (20, 45) comporte au moins un entraînement linéaire.

5. Chariot de manutention selon l'une quelconque des revendications 1 à 4, **caractérisé en ce que** la partie de la structure porteuse guidant l'organe de commande (11, 12, 39) est le châssis (1, 29).

6. Chariot de manutention selon l'une quelconque des revendications 1 à 5, **caractérisé en ce que** le guidage réalisé entre l'organe de commande (11, 12, 39) et l'une des parties de la structure porteuse comporte au moins un pivot (21, 22, 46).

7. Chariot de manutention selon l'une quelconque des revendications 1 à 6, **caractérisé en ce que** l'organe de commande (11, 12, 39) comporte au moins une pièce d'excentrique (26, 49) guidée sur l'une des parties de la structure porteuse, ainsi qu'au moins un corps de roulement (27, 50) logé en étant mobile en rotation sur la pièce d'excentrique (26, 49) avec la surface de roulement duquel la surface de commande (15, 41) de l'organe de commande (11, 12, 39) est réalisée.

8. Chariot de manutention selon l'une quelconque des revendications 1 à 7, **caractérisé en ce que** l'articulation rotative à glissière (9, 37) comporte au moins une glissière (23, 24, 47), ainsi qu'un axe de basculement (25, 48) maintenu dans la glissière (23, 24, 47) en étant mobile en course.

9. Chariot de manutention selon la revendication 8, **caractérisé en ce que** l'axe de basculement (25, 48) est orienté à la parallèle du plan de manutention et **en ce que** la glissière (23, 24, 47) présente un trajet de glissière orienté exclusivement à la perpendiculaire de l'axe de basculement (25, 48).
